# EUROPEAN PATENT SPECIFICATION

(11) **EP 1 899 830 B1**
(45) Date of publication and mention of the grant of the patent: **10.02.2010**
(21) Application number: 06785835.7
(22) Date of filing: 28.06.2006
(51) Int. Cl.: G06F 13/38, H04L 12/56

(54) **AUTOMATED SERIAL PROTOCOL TARGET PORT TRANSPORT LAYER RETRY MECHANISM**
AUTOMATISIERTER TRANSPORTSCHICHTWIEDERHOLUNGSMECHANISMUS FÜR DEN TARGET-PORT EINES SERIELLEN PROTOKOLLS
MECANISME DE REESSAI DE COUCHE TRANSPORT PAR UN PORT CIBLE DANS UN PROTOCOLE SERIALISE AUTOMATISE

(30) Priority: 30.06.2005 US 171985
(43) Date of publication of application: 19.03.2008
(73) Proprietor: Intel Corporation, Santa Clara, CA 95052 (US)
(72) Inventor: LAU, Victor, Marlboro, MA 01752 (US); SETO, Pak-lung, Shrewsbury, MA 01545 (US); CHEMUDUPATI, Suresh, Marlboro, MA 01752 (US); CHANG, Naichih, Shrewsbury, MA 01545 (US); VEMULA, Kiran, Worcester, MA 01605 (US); HALLECK, William, Lancaster, MA 01523 (US); PARIKH, Ankit, Marlborough, MA 01752 (US)
(74) Representative: Want, Clifford James
(86) International application number: PCT/US2006/025353
(87) International publication number: WO 2007/005515

(56) References cited:
- US-A- 6 108 713
- MAXTOR CORPORATION: "SAS-1.1, ST_T (transport layer for SSP target ports) state machines" 12 July 2004 (2004-07-12), T10 TECHNICAL COMMITTEE , XP002407724 Retrieved from the Internet: URL:www.t10.org/ftp/t10/document.04/04-137 r2.pdf> paragraph [9.2.6.3.3.5.1]

## Description

### BACKGROUND

### 1. FIELD

Embodiments of the invention relate to the field of retry mechanisms in serialized protocols. More particularly, embodiments of the invention relate to an automated Serial (Small Computer System Interface (SCSI)) Protocol (SSP) target port transport layer retry (TLR) mechanism.

### 2. DESCRIPTION OF RELATED ART

Serial Attached SCSI (SAS) is a protocol evolution of the parallel SCSI protocol. SAS provides a point-to-point serial peripheral interface in which device controllers may be directly linked to one another. SAS integrates two established technologies - SCSI and Serial Advanced Technology Attachment (SATA) technologies, combining the utility and reliability of the SCSI protocol with the performance advantages of SATA's serial architecture.

SAS is a performance improvement over traditional SCSI because SAS enables multiple devices of different sizes and types to be connected simultaneously in a full-duplex mode. In addition, SAS devices can be hot-plugged.

Computer devices, storage devices, and various electronic devices are being designed to comply with faster protocols that operate in a serial fashion, such as SAS protocol, to deliver the speed and performance required by today's applications.

In the SAS specification [e.g. Serial Attached SCSI-1.1 (SAS-1.1), American National Standard for Information Technology (ANSI), T10 committee, Revision 09d, status: T10 Approval, Project: 1601-D, May 30, 2005] [hereinafter the SAS standard] defines an SSP target port transport layer retry (TLR) requirements for SSP target ports.

According to the SAS standard, if a TRANSPORT LAYER RETRIES bit is set to one in a protocol-specific logical unit mode page, then the SSP target port should process link layer errors that occur while transmitting transfer ready (XFER_RDY) frames. This SAS standard protocol is described as follows.

The SSP target port first sets a RETRY DATA FRAME bit to one in each XFER_RDY frame. If the SSP target port transmits a XFER_RDY frame and does not receive an acknowledgement (i.e. an ACK/NAK timeout occurs), or receives a negative acknowledgement (NAK), then the SSP target port should retransmit the XFER_RDY frame with a different value in a target port transfer tag field with the RETRANSMIT bit set to one. For the ACK/NAK timeout case, the SSP target port is required to close the connection and open a new connection to retransmit the XFER_RDY frame. The SSP target port retransmits each XFER_RDY frame that does not receive an ACK at least one time.

If the SSP target port sends a read data frame for a logical unit that has its TRANSPORT LAYER RETRIES bit set to one in the logical unit mode page, then the SSP target port should process the link layer errors that occur while transmitting read data frames as described as follows.

If the SSP target port transmits a read data frame and does not receive an ACK/NAK (i.e. an ACK/NAK timeout occurs), or receives a NAK for that frame, the SSP target port retransmits all the read data frames from the last ACK/NAK balance point. For the ACK/NAK timeout case, the SSP target port is required to close the connection and open a new connection to retransmit the read data frames.

In this case, a CHANGE DATA POINTER is set to one in the first retransmitted read data frame and to zero in subsequent read data frames. The SSP target port should retransmit each read data frame that does not receive an ACK at least one time. The number of times the SSP target port retransmits each read data frame is typically vender-specific.

These fairly well defined rules set forth in the SAS standard for the SSP target port to handle transport layer retries are presently handled in firmware. Firmware implementation introduces a great deal of firmware overhead due to the large amount of required handshaking between firmware and hardware, and a great deal of processor compute cycle time.
Document SAS-1.1, ST_T (transport layer for SSP target ports) state machines" MAXTOR CORPORATION, 12 July 2004 discloses a SAS Working Group proposal for state machine changes to the SAS protocol specification.
Document US 6108713 discloses a Media Access Controller (MAC) for transferring data along a computer network, including a transmit MAC that is configured to process out-going packet data received from an Upper Layer for transmission to a physical layer.

### SUMMARY

There is provided an apparatus as set out in claim 1, and a method as set out in claim 9.

### BRIEF DESCRIPTION OF THE DRAWINGS

Figure 1 is a block diagram illustrating an example of a system in which an SSP target port can be utilized.

Figure 2 is a block diagram illustrating a scatter gather list for an input/output (I/O) command.

Figure 3 is a block diagram illustrating an I/O context for an ITLQ nexus.

Figure 4 is a block diagram illustrating an example of an SSP target port.

Figure 5 is a block diagram illustrating an example of an SSP target port.

Figure 6 is a diagram illustrating an SSP target port of an SAS controller and performed functionality to handle a transport layer retry (TLR) process for I/O write commands.

Figure 7 is a diagram that illustrates how the SSP target port handles retry write data frames as part of the TLR mechanism.

Figure 8 is a block diagram illustrating how the SSP transport port handles read data frames as part of the TLR mechanism for I/O read commands.

### DESCRIPTION

In the following description, the various embodiments of the invention will be described in detail. However, such details are included to facilitate understanding of the invention and to describe exemplary embodiments for employing the invention. Such details should not be used to limit the invention to the particular embodiments described because other variations and embodiments are possible while staying within the scope of the invention. Furthermore, although numerous details are set forth in order to provide a thorough understanding of the embodiments of the invention, it will be apparent to one skilled in the art that these specific details are not required in order to practice the embodiments of the invention. In other instances details such as, well-known methods, types of data, protocols, procedures, components, electrical structures and circuits, are not described in detail, or are shown in block diagram form, in order not to obscure the invention.

Embodiments of the invention relate to an automated Serial (Small Computer System Interface (SCSI)) Protocol (SSP) target port transport layer retry (TLR) mechanism. Particularly, embodiments relate to a hardware automated SSP target port that employs a transport layer retry (TLR) mechanism in both a wide and narrow port configuration, as opposed to utilizing firmware, to thereby improve frame processing latency, reduce protocol overhead, and to improve overall system input/output (I/O) performance. For example, the SSP target port may be implemented as a circuit, such as, an integrated circuit.

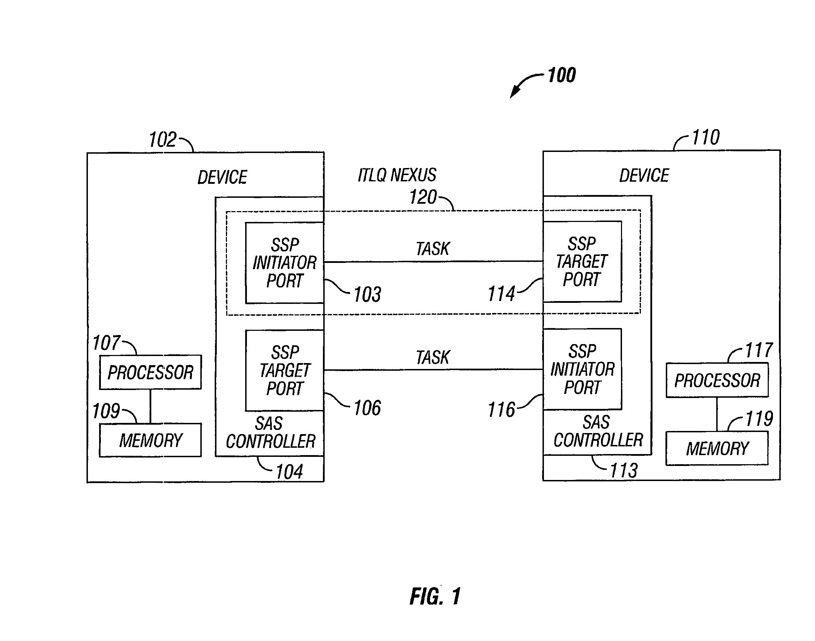

Turning to Figure 1, Figure 1 is a block diagram illustrating a system including first device 102 coupled to another device 110, in which each device has an SAS controller 104 and 113, respectively, that includes an SSP target port. Device 110 is communicatively coupled to device 102 over a link in accordance with the SAS protocol standard. Each device includes a SAS controller 104 and 113 that is utilized to provide communication between the two devices 102 and 110 over a respective link.

Device 102 may include a processor 107 to control operations in the device 102 and SAS controller 104 to control serial communication with device 110 in accordance with the SAS standard. Further, device 102 may include memory 109 coupled to processor 107 as well as a plurality of different input/output (I/O) devices (not shown).

Similarly, device 110 may likewise include processor 117 to control operations in device 110 and SAS controller 113 to control serial communication with the other device 102 in accordance with the SAS protocol. Further, device 110 may include memory 119 coupled to processor 117 as well as a plurality of different input/output (I/O) devices (not shown).

Each device may include a SAS controller 104 and 113, respectively. Further, SAS controller 113 may include an SSP target port 114 and an SSP initiator port 116 whereas SAS controller 104 may include an SSP target port 106 and an SSP initiator port 103. In accordance with this example, device 102 through SSP initiator port 103 may communicate a task over a link to SSP target port 114 of SAS controller 113 of device 110.

It should be appreciated that device 110 and device 102 may be any type of device such as a personal computer, laptop computer, network computer, server, router, expander, set-top box, mainframe, storage device, hard disk drive, flash memory, floppy drive, compact disk read-only memory (CD-ROM), digital video disk (DVD), flash memory, hand-held personal device, cell phone, etc., or any sort of device having a processor and/or memory.

Embodiments of the invention relate to a device 102 having an SAS controller 104 that includes an SSP initiator port 103 that communicates a task across a link to another device 110 and the structures and functions by which SSP target port 114 implements a transport layer retry (TLR) mechanism, as will be described in detail hereinafter. To aid in this description, a task nexus 120 may be defined as a nexus between SSP target port 114, SSP initiator port 103, a logical unit (comprising the devices, links, and nodes through which a task is transmitted), and the task itself (termed an ITLQ nexus).

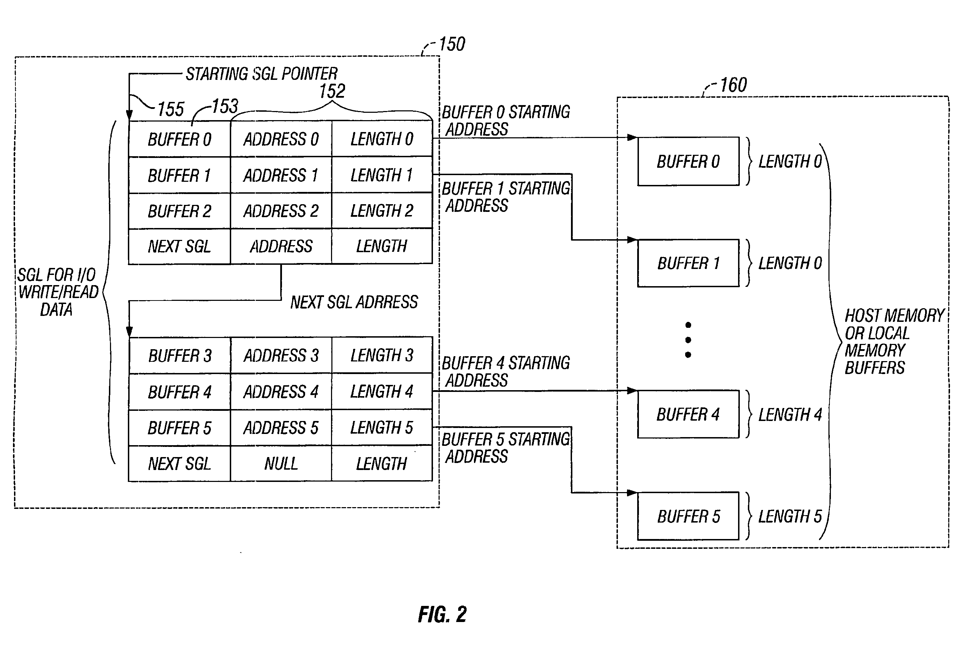

Looking briefly at Figure 2, Figure 2 illustrates a scatter gather list (SGL) buffering mechanism 150 that utilizes address length (A/L) pairs 152 to point to and indicate the size of host or local memory buffers 160 that store the receive or transmit frames. Also, SGL buffering mechanism 150 further includes a buffer number field 153 and a SGL pointer 155. The host memory may be memory associated with the device itself such as memory 119 or may be memory of the SAS controller 113 itself. The use of scatter gather list (SGL) memory access is well known and will not be described in detail, and is but one method of memory access that may be utilized with embodiments of the invention.

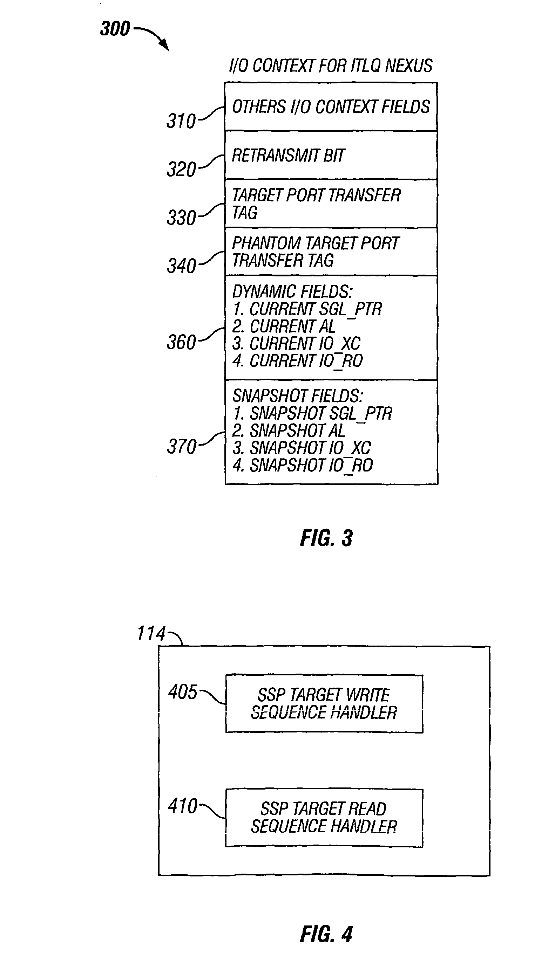

In one embodiment, a plurality of I/O contexts are defined for each task or ITLQ nexus. With reference to Figure 3, Figure 3 is a table illustrating I/O context for an ITLQ nexus. The I/O context is based on initial I/O read/write information that is passed to the transport layer. The I/O context has dynamic fields that are maintained by the transport layer. A direct memory access (DMA) processor of the SSP target port may keep track of the current I/O process and the plurality of I/O contexts may be stored within the SSP target port, as will be described. Particularly, table 300 of Figure 3 shows these I/O context fields.

For example, the I/O context for the ITLQ nexus may include a retransmit bit 320, a target port transfer TAG 330, as well as a phantom target port and transfer TAGs 340. As will be discussed, the phantom target port transfer tag is used in a process to generate a different and an unused target transfer tag due to XFER_RDY frame retries.

The I/O context for an ITLQ nexus may further include dynamic fields 360, such as the current scatter gather list pointer (SGL_PTR) which may be a pointer to a local or host memory buffer; the current address length pair (A/L); the current I/O read/write data transfer count (I/O_XC); and the current I/O read/write data relative offset (I/O_RO).

Further, as well as the dynamic fields 360, the I/O context for the ITLQ nexus may further include snapshot fields 370, such as: snapshot SGL_PTR; snapshot A/L; snapshot I/O_XC; and snapshot I/O_RO. The snapshot fields are analogous to the dynamic fields except that they are previously saved fields for use in the SSP target port transport layer retry mechanism, as will be described. Additionally, other I/O context fields 310 may be utilized.

As will be described, the transmit transport layer of the SSP target port updates the dynamic fields 360 when it transmits a read data frame from the transmit buffer to the link and receives an acknowledgement (ACK). Further, the receive transport layer updates the dynamic fields 360 when the DMA processor transmits a write data frame from the receive buffer to the host or local memory.

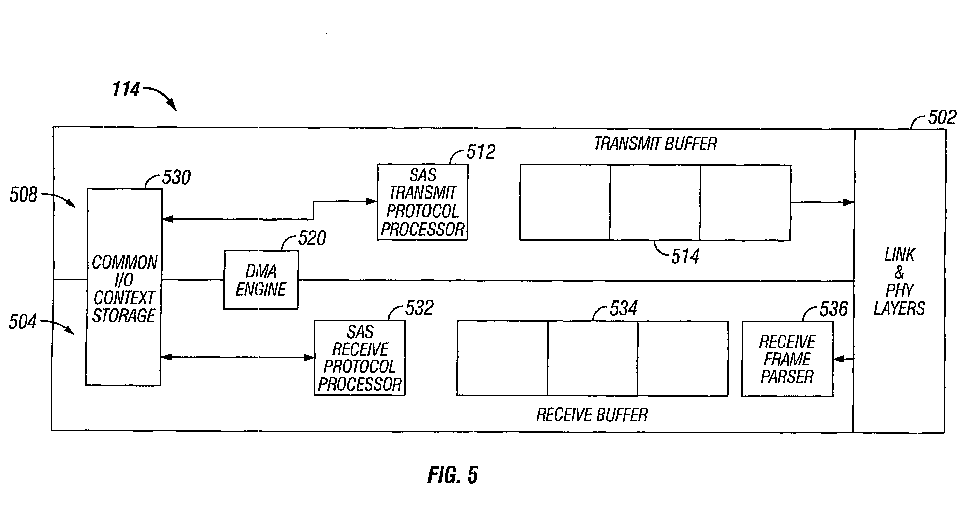

With reference now to Figure 4, Figure 4 is a block diagram illustrating an example of an SSP target port 114. In one embodiment, SSP target port 114 includes an SSP target write sequence handler 405 and an SSP target read sequence handler 410. The SSP target write sequence handler 405 handles transport layer retry situations for I/O write commands. The SSP target read sequence handler 410 handles transport layer retry for I/O read commands. In one embodiment, both the SSP target write sequence handler 405 and the SSP target read sequence handler 410 may be implemented in hardware as will be described with reference to Figures 5-8. More particularly, the SSP target write sequence handler 405 may be implemented by a receive transport layer of the SSP target port 114 and the SSP target read sequence handler 410 may be implemented by a transmit transport layer of the SSP target port 114, as will be described in detail hereinafter.

It should be noted that it is assumed that an SSP target port 114 assigns a unique TAG for each ITLQ nexus. The TAG field is used by the SSP target port 114 to associate an I/O context to a particular ITLQ nexus. If the TAG is not unique across different remote nodes, the SSP target port 114 concatenates the remote node index with the TAG to form a unique I/O context ID to associate I/O context for a particular ITLQ nexus. Note that, each remote node is assigned a unique remote node index by the device.

With reference now to Figure 5, Figure 5 is a block diagram illustrating a SSP target port 114, according to one embodiment of the invention. The SSP target port 114 includes a receive transport layer 504 and a transmit transport layer 508.

In one embodiment, the target port may be hardware based. The target port 114 may be a circuit. For example the circuit may be an integrated circuit, a processor, a microprocessor, a signal processor, an application specific integrated circuit (ASIC), or any type of suitable logic or circuit to implement the functionality described herein.

Particularly, the target port 114 includes a transmit transport layer 508 and receive transport layer 504 both of which are coupled to a link 502. A transmit protocol processor 512 of the transmit transport layer 508 controls a TLR mechanism in a serialized protocol. A receive protocol processor 532 of the receive transport layer 504 is coupled to the transmit transport layer and likewise controls the TLR mechanism in the serialized protocol. As previously discussed, the serialized protocol is compatible with a Serial Attached (Small Computer System Interface (SCSI)) (SAS) protocol standard.

As will be discussed, if the transmit protocol processor 512 of the transmit protocol layer 508 transmits a XFER_RDY frame with the RETRY DATA FRAME bit set to one and does not receive an acknowledgement or receives a NAK for that XFER_RDY frame, the transmit protocol processor 512 retransmits the XFER_RDY frame with a different target port transfer tag and with the RETRANSMIT bit set to one. In one embodiment, the different transfer tag may be a phantom tag that includes a number not associated with any outstanding ITLQ nexus.

Both receive and transmit transport layers 504 and 508 are coupled to link and physical layers 502. Further, both the receive transport layer (RxTL) 504 and transmit transport layer (TxTL) 508 both utilize a direct memory access (DMA) processor 520 and common I/O context storage 530.

Looking more particularly at receive transport layer 504, receive transport layer 504 includes a receive frame parser 536 for parsing frames received from link and physical layer 502, a receive buffer 534 for storing receive frame data, an SAS receive protocol processor 532, and common I/O context storage 530 to store I/O contexts for ITLQ nexuses (as discussed with Figure 3). Receive transport layer 504 implements the SSP target write sequence handler 405 functionality, previously discussed.

Looking at the transmit transport layer 508, the transmit transport layer 508 includes common context storage 530 to store I/O contexts for the ITLQ nexuses (as discussed with reference to Figure 3), a SAS transmit protocol processor 512, and transmit buffer 514 for storing transmit data. Transmit transport layer 508 implements the SSP target read sequence handler 405 functionality, previously discussed.

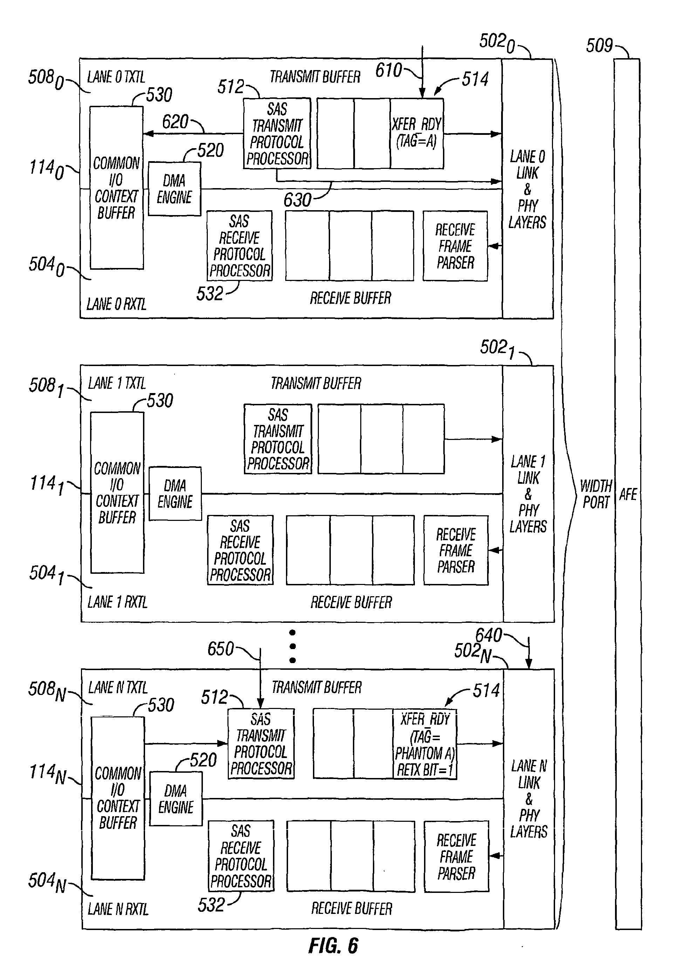

The SAS transmit protocol processor 512 and the SAS receive protocol processor 532 are utilized in implementing SAS standard protocols as well as in implementing aspects of the transport layer retry (TLR) mechanism as will be described. The SAS transmit and receive processors may be any type of suitable processor or logic to accomplish these TLR functions. Additionally, each of the previously discussed components of the SSP target port 114 and their respective functionality in implementing aspects of the transport layer retry mechanism will now be discussed in detail with reference to Figures 6-8.

With reference now to Figures 6-8, Figures 6-8 illustrate the operation of the previously-described SSP target port 114 as it operates within an SAS controller of a device in implementing a transport layer retry (TLR) mechanism.

Looking particularly at Figure 6, Figure 6 is a diagram illustrating an SSP target port 114 of an SAS controller and performed functionality to handle a transport layer retry (TLR) process for I/O write commands. It should be appreciated that the SSP target port 114 may be a narrow SSP target port in which there is only one phy associated with the SSP target port (e.g. 114₀) or the SSP target port 103 may be a wide port in which there are multiple phys associated with the SSP target port, such as shown in Figure 6, with SSP target ports 114_{0-N}.

As illustrated at point 610 of Figure 6, the SSP target port 114₀ transmits a XFER_RDY frame (with Tag = A) with the RETRY DATA FRAME bit set to one, and, in this example, does not receive an ACK/NAK (i.e. an ACK/NAK timeout occurs), or receives a NAK for that frame. In response, the SSP target port 114₀ retransmits the XFER_RDY frame with a different value in the target port transfer tag field with the RETRANSMIT bit set to one. For the ACK/NAK timeout case, the SSP target port 114 is required to open a new connection before it starts the retry sequence.

Utilizing the ACK/NAK timeout case as an example, the transmit transport layer 508₀ requests that the link layer close the connection. However, before closing the connection, a retry sequence is initiated in which transmit transport layer 508₀ of the SSP target port 114 under the control of the SAS transmit protocol processor 512 sets RETRANSMIT bit in the I/O context for that particular ITLQ nexus to one in order to remember that the transmit XFER_RDY frame is in a retry state. Also, at point 630 the SAS transmit protocol processor 512 causes the link layer to close the connection.

Thus, when a new connection is established, the transmit transport layer can check the RETRANSMIT bit in the I/O context for that particular ITLQ nexus, find that it is equal to one, and then start retransmitting the XFER_RDY frame with a different value in the target transport transfer tag with the RETRANSMIT bit set to one.

The number of times the transmit transport layer retries a XFER_RDY frame, may be a programmable value stored in a configuration space, a load page, or a chip initialization parameter.

In one embodiment, a different target port transfer tag due to a XFER_RDY retry may be generated by the transport layer requesting a target port transfer tag that is not associated with any outstanding ITLQ nexus from firmware.

In one particular embodiment, the different transfer tag may be created by a phantom target port transfer tag mechanism.

The SAS standard defines a 16-bit target port transfer tag field, which supports up to 64,000 (e.g. 64K) outstanding I/O commands. Typically, the SSP target port supports less than the 64K outstanding I/O commands, for example, 16K. In this example, the most two significant bits are not used in the target port transfer tag.

In this phantom tag embodiment, the SSP target port 114 simply changes the two most significant bits to generate a different target port transfer tag for the XFER_RDY frame retry. Therefore, the maximum number of times it can retry is 2 ^ 2 = 4 (2 ^ number of bits not used in the target port transfer tag). This mechanism is referred to as the phantom target port transfer tag mechanism. The phantom target port transfer tags may be stored and updated in the I/O context for that particular ITLQ nexus (e.g. at point 620) as illustrated in Figure 3.

In the phantom target port transfer tag embodiment, when the transmit transport layer 508 retransmits XFER_RDY frames with a different value in the target port transfer tag field and the RETRANSMIT bit set to one, a new phantom target port transfer tag is selected (e.g. by the SAS transmit protocol processor 512) and the phantom target port transfer tag field (e.g. Fig. 3) in the I/O context for that particular ITLQ nexus is updated (e.g. at point 620).

Continuing with the present example of an ACK/NAK timeout case, at point 640 in Figure 6, the link layer 502_{N} opens a new connection. Under the control of the SAS transmit protocol processor 512, the transmit transport layer 508_{N} checks whether the I/O context RETRANSMIT bit field is set to one for that particular ITLQ nexus during the processing of an I/O write command. If so, the transmit transport layer 508_{N} sets the XFER_RDY frame's RETRANSMIT bit to one and target port transfer tag field to the new phantom target transfer tag value from the I/O context for that particular ITLQ nexus. Thus, during the processing of a write command, as seen in transmit buffer 514, for XFER_RDY frames the TAG is set to a phantom value (e.g. phantom A) and the RETRANSMIT bit is set to one and XFER_RDY frames are sent.

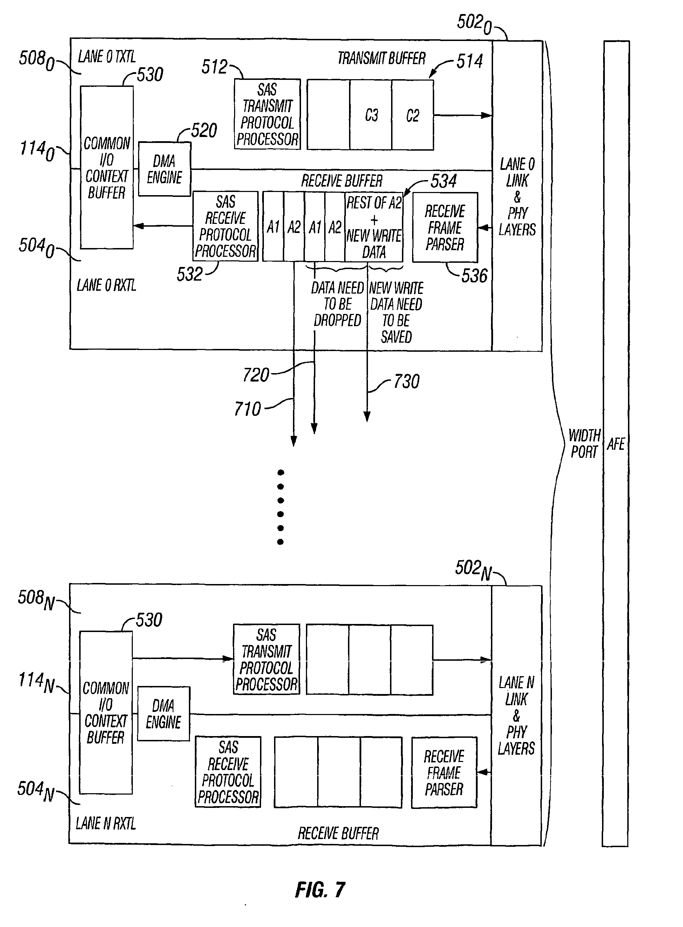

Turning to Figure 7, when an SSP initiator port retransmits write data from the ITLQ nexus due to an ACK/NAK timeout or receives a NAK, the SSP initiator port is required to transmit all the write data frames from previous XFER_RDY frames. In one embodiment the SSP target port 114 handles this situation by updating the dynamic field in the I/O context for that particular ITLQ nexus for all of the last good write data frames received for that outstanding initiator port write command. When any of the receive transport layers 504_{0-N} of a target port 114 receive a write data frame with the CHANGING DATA POINTER bit set to one (e.g. the first retransmitted write data frame for the ITLQ nexus), the receive transport layer 504 needs to verify that the write data frame is a valid retransmitted write data frame. This may be accomplished by checking the write data frames data offset field less than or equal to the I/O context buffer's dynamic I/O read/write data relative offset field. If the write data frame is valid, the SSP target port 114 can initiate the transport layer retry (TLR) process.

For example, if the write data frame's offset data offset field is less than the I/O context dynamic's I/O read/write offset field, the SSP target port 114 jumps to a discard mode (for that particular ITLQ nexus) and discards all the write data bytes received for that ITLQ nexus until the saved dynamics I/O read/write offset has been reached. It then switches back to a normal receive mode to save all future data bytes for the particular ITLQ nexus.

On the other hand, if the write data frame's data offset field is equal to the I/O context dynamic's I/O read/write offset field it just enters the normal receive mode to save all the data bytes for the particular ITLQ nexus.

In one embodiment, in order to handle write data frame retry receipt, the transmit transport layer 508 takes a snapshot of the dynamic field in common context buffer 530 (e.g. see Fig. 3) when it transmits a XFER_RDY frame. Since during transport layer retry, the initiator port is required to transmit all the write data frames from the current XFER_RDY frame; when the target port receives a write data frame with the CHANGING DATA POINTER bit set to one that write data frame must be the first write data frame for the previous XFER_RDY frame. It should be noted that the receive transport layer 504 verifies that the write data offset field is equal to the snapshot I/O read/write offset field in the common context buffer 530 to ensure that the first retry write data frame is the first write data frame for the previous XFER_RDY frame.

Therefore, the SSP target port 114 can choose not to discard all the previous received good write data bytes for that ITLQ nexus until the saved relative offset for the last good write data frame. Particularly, there is no penalty for the DMA processor to retransmit those already received write data bytes to the host or local memory buffers.

An example of recreating the write data frame for a ITLQ nexus will now be described. For example, at point 710 the SSP target port 114 receives A2 and responds with an ACK, but, in this example, the ACK is lost in transmission. Accordingly, an ACK/NAK timeout occurs at the SSP initiator port. The SSP initiator port reopens a new connection and retransmits all the write data frames from the previous XFER_RDY frame, starting at frame A1. It should be noted that each time the DMA processor 520 outputs a write data frame from the receive buffer, the receive transport layer 504₀ updates the dynamic fields according to the size of the write data frame in the receive buffer. In this example, the last good received data frame is A2.

As shown at point 720 with the write data frames CHANGING DATA POINTER bit set to one and the write data frames data offset field being less than the I/O read/write data relative offset of the receive transport layer's I/O common context buffer 530, the receive transport layer 504₀ enters discard mode and discards all the write data until the last good received write data frames relative offset.

At point 730, the receive transmit layer 504₀ goes back to a normal mode to save all the new good write data bytes in the receive buffer 534.

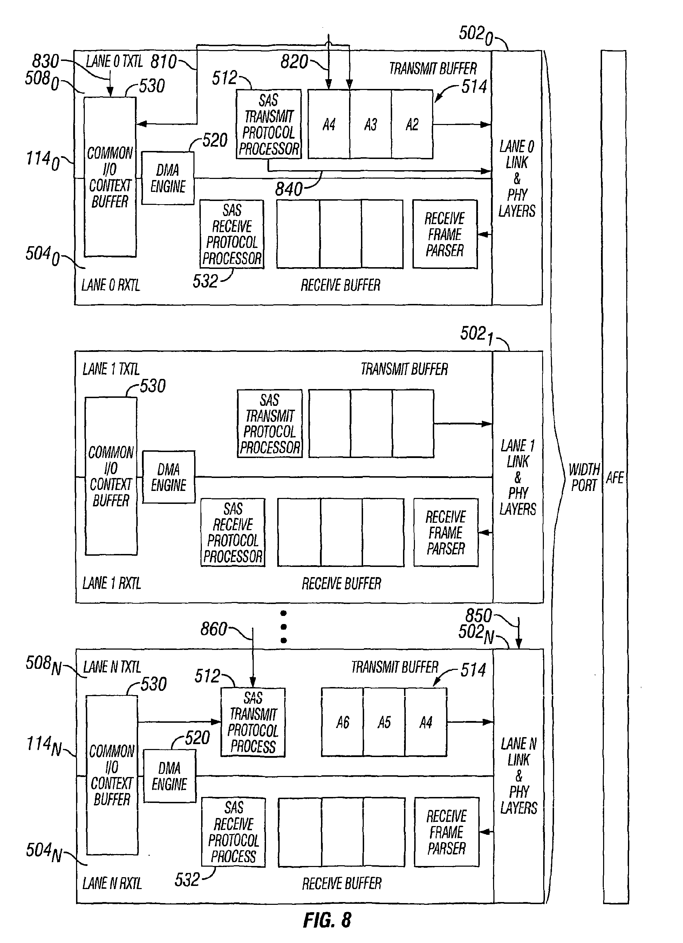

Turning now to Figure 8, Figure 8 is a block diagram illustrating how the SSP transport port 114 handles read data frames as part of a transport layer retry (TLR) mechanism for I/O read commands.

If a SSP target port 114 transmits a read data frame and does not receive an ACK/NAK (i.e. and ACK/NAK timeout occurs), or receives a NAK occurs for that read data frame, the SSP target port retransmits all the read data frames since a previous time when ACK/NAK balance occurred. For the ACK/NAK timeout case, the SSP target port 114 opens a new connection before it starts the retry sequence.

As shown in Figure 8, when the transmit transport layer 504₀ transmits a read data frame and ACK/NAK timeout occurs or a NAK is received, at point 820, the transmit transport layer 504₀ rolls back the dynamic fields in the I/O context for that particular ITLQ nexus under the control of the SAS transmit protocol processor 512 to the previous ACK/NAK balance point, at point 810, by copying the snapshot field back to the dynamic fields (e.g. see Figure 3)..

This enables the transmit transport layer 504₀ to retransmit all the read data frames from the previous ACK/NAK balance point. It starts to retransmit all the read data frames starting at frame A4.

In order to accomplish this, the link layer 502 needs to provide an ACK/NAK balance indication to the transport layer. Thus, every time when an ACK/NAK balance occurs, the transport layer 508 takes a snapshot of the dynamic fields by copying the dynamic field's contents to the snapshot fields in the common context buffer 530.

For the ACK/NAK timeout case, the transmit transport layer 508₀ requests the link layer to close the connection at point 840. In order to handle closing the connection due to the ACK/NAK timeout before the transmit transport layer starts the retry sequence, the transmit transport layer 500₀ needs to set the RETRANSMIT bit in the I/O Context for that particular ITLQ to one to remember that the I/O read data sequence is in a retry state.

Thus, when a new connection is establishes, the transmit transport layer 504_{N} at point 850 can check the RETRANSMIT bit and the common context buffer 530 to check that it is set to one and start servicing the I/O read data retry sequence by setting the CHANGING DATA POINTER bit to one for the first retransmitted read data frame. This may be done under the control of the SAS transmit protocol processor 512 and the read data may be transmitted through transmit buffer 514 onto the link.

The number of times that the transmit transport layer 504_{N} retries a read data frame may be programmable via a specific configuration space or mode page or chip initialization parameter.

According to embodiments of the invention, a complete hardware automated mechanism to handle SSP target port transport layer retries, requiring virtually no assistance from firmware at all, is disclosed. In this way, firmware overheads are significantly reduced and there is a significant reduction in CPU compute cycle time and handshaking between firmware and hardware. This translates into improved overall system performance and improved SAS protocol control performance, especially, in multiple protocol applications. Moreover, the firmware design that is still required is substantially simplified, especially in large storage system environments and the real time handling requirements from the firmware is significantly reduced.

## Claims

1. An apparatus comprising:
a circuit including a transmit transport layer and a receive transport layer, the transmit and receive transport layers being coupled to a link;
a transmit protocol processor (512) of the transmit transport layer to control a transport layer retry (TLR) mechanism for a target port in a serialized protocol wherein, the serialized protocol is compatible with a Serial Attached (Small Computer System Interface (SCSI)) (SAS) protocol standard;
a receive protocol processor (532) of the receive transport layer coupled to the transmit protocol layer to control the TLR mechanism for the target port in the serialized protocol; and
a task nexus to identify a target port, an initiator port, a logical unit, and a task.

2. The apparatus of claim 1, further comprising an input/output (I/O) context buffer (530) of the transmit transport layer to store an I/O context including data related to the task nexus.

3. The apparatus of claim 2 wherein the different target port transfer tag is a phantom tag including a number not associated with an outstanding command.

4. The apparatus of claim 3, wherein the phantom tag is updated in the input/output (I/O) context buffer (530) for the task nexus.

5. The apparatus of claim 1, further comprising an input/output (I/O) context buffer (530) of the receive transport layer to store an I/O context for the task nexus.

6. The apparatus of claim 5, wherein, the I/O context buffer (530) stores dynamic and snapshot fields related to the task nexus.

7. The apparatus of claim 6, wherein, the receive protocol processor (532) based upon the dynamic and snapshot fields of the I/O context associated with the task nexus determines which write data frames received from an initiator port to save.

8. The apparatus of claim 1, wherein, the circuit is an integrated circuit.

9. A method comprising:
controlling a transmit protocol processor (512) coupled to a link to provide a transport layer retry (TLR) mechanism for a target port in a serialized protocol;
controlling a receive protocol processor (532) coupled to the link to provide the TLR mechanism for the target port in the serialized protocol; and
defining a task nexus to identify an initiator port, a target port, a logical unit, and a task, wherein, the serialized protocol is compatible with a Serial Attached (Small Computer System Interface (SCSI)) (SAS) protocol standard.

10. The method of claim 9, further comprising storing an (I/O) context for the task nexus.

11. The method of claim 10, wherein the different target port transfer tag is a phantom tag including a number not associated with any outstanding commands, and wherein, the I/O context is updated with the phantom tag.

12. The method of claim 11, further comprising storing an I/O context for the task nexus having dynamic and snapshot fields.

13. The method claim 12, wherein, based upon the dynamic and snapshot fields of the I/O context associated with the task nexus, determining which write data frames received from an initiator port to save.

14. A controller comprising:
a target port circuit including the apparatus according to any of claims 1 to 8, wherein the target port circuit communicates with an initiator port of a second controller of a storage device compatible with the SAS protocol standard.

15. The controller of claim 14, further comprising an input/output (I/O) context buffer (530) of the transmit transport layer to store an I/O context associated with a task nexus used to identify an initiator port, a target port, a logic unit, and a task, the I/O context buffer (530) storing dynamic and snapshot fields related to the task nexus.

16. The controller of claim 15 wherein the different target port transfer tag is a phantom tag including a number not associated with an outstanding command, and wherein the phantom tag is updated in the input/output (I/O) context buffer (530).

17. The controller of claim 16, further comprising an input/output (I/O) context buffer (530) of the receive transport layer to store an I/O context for the task nexus, the I/O context buffer (530) storing dynamic and snapshot fields related to the task nexus, and wherein, the receive protocol processor (532) based upon the dynamic and snapshot fields of the receive I/O context buffer (530) associated with the task nexus determines which write data frames received from an initiator port to save.

## Patentansprüche

1. Vorrichtung, die folgendes umfasst:
eine Schaltung, die eine Sende-Transportschicht und eine Empfangs-Transportschicht aufweist, wobei die Sende- und Empfangs-Transportschichten mit einer Verknüpfungseinrichtung verbunden sind;
einen Sende-Protokollprozessor (512) der Sende-Transportschicht zur Steuerung eines Transportschichtwiederholungs-Mechanismus (TLR-Mechanismus) für einen Ziel-Port in einem serialisierten Protokoll, wobei das serialisierte Protokoll kompatibelist mit einem Serial Attached (Small Computer System Interface (SCSI) (SAS) Protokollstandard;
einen Empfangs-Protokollprozessor (532) der Empfangs-Transportschicht, der mit der Sende-Protokollschicht gekoppelt ist, um den TLR-Mechanismus für den Ziel-Port in dem serialisierten Protokoll zu steuern; und
ein Aufgabenverbindungsglied zum Identifizieren eines Ziel-Ports, eines Initiator-Ports, einer Logikeinheit und einer Aufgabe.

2. Vorrichtung nach Anspruch 1, wobei diese ferner einen Ein-Ausgabe (E/A) Kontextpuffer (530) der Sende-Transportschicht zum Speichern eines E/A-Kontexts umfasst, mit Daten, die sich auf das Aufgabenverbindungsglied beziehen.

3. Vorrichtung nach Anspruch 2, wobei es sich bei dem unterschiedlichen Ziel-Port-Übertragungskennzeichen um ein Phantomkennzeichen mit einer Ziffer handelt, die keinem ausstehenden Befehl zugeordnet ist.

4. Vorrichtung nach Anspruch 3, wobei das Phantomkennzeichen in dem Ein-Ausgabe (E/A) Kontextpuffer (530) für das Aufgabenverbindungsglied aktualisiert wird.

5. Vorrichtung nach Anspruch 1, ferner mit einem Ein-Ausgabe (E/A) Kontextpuffer (530) der Empfangs-Transportschicht zum Speichern eines E/A-Kontexts für das Aufgabenverbindungsglied.

6. Vorrichtung nach Anspruch 5, wobei der E/A-Kontextpuffer (530) dynamische und Momentaufnahmefelder in Bezug auf das Aufgabenverbindungsglied speichert.

7. Vorrichtung nach Anspruch 6, wobei der Empfangs-Protokollprozessor(532), der auf den dynamischen und Momentaufnahmefelderndes E/A-Kontexts basiert, der dem Aufgabenverbindungsglied zugeordnet ist, bestimmt, welche Schreibdaten-Frames, die von einem Initiator-Port empfangen werden, gespeichert werden sollen.

8. Vorrichtung nach Anspruch 1, wobei es sich bei der Schaltung um eine integrierte Schaltung handelt.

9. Verfahren, das folgendes umfasst:
das Steuern eines Sende-Protokollprozessors (512), der mit einer Verknüpfungseinrichtung gekoppelt ist, um einen Transportschichtwiederholungs-Mechanismus (TLR-Mechanismus) für einen Ziel-Port in einem serialisierten Protokoll bereitzustellen; und
das Steuern eines Empfangs-Protokollprozessors (532), der mit der Verknüpfungseinrichtung gekoppelt ist, um den TLR-Mechanismus für den Ziel-Port in dem serialisierten Protokoll bereitzustellen; und
das Definieren eines Aufgabenverbindungsglieds zum Identifizieren eines Initiator-Ports, eines Ziel-Ports, einer Logikeinheit und einer Aufgabe, wobei das serialisierte Protokoll kompatibelist mit einem Serial Attached (Small Computer System Interface (SCSI) (SAS) Protokollstandard.

10. Verfahren nach Anspruch 9, wobei das Verfahren ferner das Speichern eines E/A-Kontexts für das Aufgabenverbindungsglied umfasst.

11. Verfahren nach Anspruch 10, wobei es sich bei dem unterschiedlichen Ziel-Port-Übertragungskennzeichen um ein Phantomkennzeichen mit einer Ziffer handelt, die keinem ausstehenden Befehl zugeordnet ist.

12. Verfahren nach Anspruch 11, wobei das Verfahren ferner das Speichern eines E/A-Kontexts für das Aufgabenverbindungsglied mit dynamischen und Momentaufnahmefeldern umfasst.

13. Verfahren nach Anspruch 12, wobei auf der Basis der dynamischen und Momentaufnahmefelder des E/A-Kontexts, der dem Aufgabenverbindungsglied zugeordnet ist, bestimmt wird, welche von einem Initiator-Port empfangenen Schreibdaten-Frames gespeichert werden sollen.

14. Steuereinheit, die folgendes umfasst:
eine Ziel-Port-Schaltung, die eine Vorrichtung nach einem der Ansprüche 1 bis 8 aufweist, wobei die Ziel-Port-Schaltung mit einem Initiator-Port einer zweiten Steuereinheit einer Speichervorrichtung kommuniziert, die mit dem SAS-Protokollstandard kompatibelist.

15. Steuereinheit nach Anspruch 14, wobei diese ferner einen Ein-Ausgabe (E/A) Kontextpuffer (530) der Sende-Transportschicht zum Speichern eines E/A-Kontexts umfasst, der einem Aufgabenverbindungsglied zugeordnet ist, zum Identifizieren eines Initiator-Ports, eines Ziel-Ports, einer Logikeinheit und einer Aufgabe, wobei der E/A-Kontextpuffer (530) dynamische und Momentaufnahmefelder speichert, die sich auf das Aufgabenverbindungsglied beziehen.

16. Steuereinheit nach Anspruch 15, wobei es sich bei dem unterschiedlichen Ziel-Port-Übertragungskennzeichen um ein Phantomkennzeichen mit einer Ziffer handelt, die keinem ausstehenden Befehl zugeordnet ist, und wobei das Phantomkennzeichen in dem Ein-Ausgabe (E/A) Kontextpuffer (530) aktualisiert wird.

17. Steuereinheit nach Anspruch 16, wobei diese ferner einen Ein-Ausgabe (E/A) Kontextpuffer (530) der Empfangs-Transportschicht zum Speichern eines E/A-Kontexts für das Aufgabenverbindungsglied umfasst, wobei der E/A-Kontextpuffer (530) dynamische und Momentaufnahmefelder speichern, die sich auf das Aufgabenverbindungsglied beziehen, und wobei der Empfangs-Protokollprozessor (532) auf der Basis der dynamischen und Momentaufnahmefelder des Empfangs-E/A-Kontextpuffers (530), die dem Aufgabenverbindungsglied zugeordnet sind, bestimmt, welche von einem Initiator-Port empfangenen Schreibdaten-Frames gespeichert werden sollen.

## Revendications

1. Appareil comprenant :
un circuit incluant une couche transport d'émission et une couche transport de réception, les couches transports d'émission et de réception étant couplées à une liaison ;
un processeur de protocole d'émission (512) de la couche transport d'émission pour contrôler un mécanisme de réessai de couche transport (en anglais « Transport Layer Retry » - TLR) pour un port cible dans un protocole sérialisé dans lequel le protocole sérialisé est compatible avec une norme de protocole SAS (en anglais « Serial Attached SCSI (Small Computer System Interface) ») ;
un processeur de protocole de réception (532) de la couche transport de réception couplé à la couche de protocole d'émission pour contrôler le mécanisme TLR pour le port cible dans le protocole sérialisé ; et
un groupe connecté de tâches pour identifier un port cible, un port initiateur, une unité logique et une tâche.

2. Appareil selon la revendication 1, comprenant en outre une mémoire tampon contextuelle d'entrée/de sortie (en anglais « Input/Output » - I/O) de la couche transport d'émission pour stocker un contexte I/O y compris des données concernant le groupe connecté de tâches.

3. Appareil selon la revendication 2, dans lequel la différente étiquette de transfert de port cible est une étiquette fantôme incluant un nombre non associé à une commande en cours.

4. Appareil selon la revendication 3, dans lequel l'étiquette fantôme est mise à jour dans la mémoire tampon contextuelle d'entrée/de sortie (en anglais « Input/Output » - I/O) (530) pour le groupe connecté de tâches.

5. Appareil selon la revendication 1, comprenant en outre une mémoire tampon contextuelle d'entrée/de sortie (en anglais « Input/Output » - I/O) (530) de la couche transport de réception pour stocker un contexte I/O pour le groupe connecté de tâches.

6. Appareil selon la revendication 5, dans lequel la mémoire tampon contextuelle I/O (530) stocke des champs dynamiques et instantanés relatifs au groupe connecté de tâches.

7. Appareil selon la revendication 6, dans lequel le processeur de protocole de réception (532) basé sur les champs dynamiques et instantanés du contexte I/O associé au groupe connecté de tâches détermine les trames de données d'écriture reçues d'un port initiateur à enregistrer.

8. Appareil selon la revendication 1, dans lequel, le circuit est un circuit intégré.

9. Procédé comprenant les étapes consistant à :
contrôler un processeur de protocole d'émission (512) couplé à un lien pour fournir un mécanisme de réessai de couche transport (en anglais « Transport Layer Retry » - TLR) pour un port cible dans un protocole sérialisé ;
contrôler un processeur de protocole de réception (532) couplé au lien pour fournir le mécanisme TLR pour le port cible dans le protocole sérialisé ; et
définir un groupe connecté de tâches pour identifier un port cible, un port initiateur, une unité logique et une tâche, dans lequel le protocole sérialisé est compatible avec une norme de protocole SAS (en anglais « Serial Attached SCSI (Small Computer System Interface) »).

10. Procédé selon la revendication 9, comprenant en outre l'étape consistant à stocker un contexte (I/O) pour le groupe connecté de tâches.

11. Procédé selon la revendication 10, dans lequel la différente étiquette de transfert de port cible est une étiquette fantôme incluant un nombre non associé à toute commande en cours, et dans lequel le contexte I/O est mis à jour avec l'étiquette fantôme.

12. Procédé selon la revendication 1, comprenant en outre l'étape consistant à stocker un contexte I/O pour le groupe connecté de tâches ayant des champs dynamiques et instantanés.

13. Procédé selon la revendication 12, comprenant en outre l'étape consistant, en fonction des champs dynamiques et instantanés du contexte I/O associé au groupe connecté de tâches, à déterminer les trames de données d'écriture reçues d'un port initiateur à enregistrer.

14. Contrôleur comprenant :
un circuit de port cible incluant l'appareil selon l'une quelconque des revendications 1 à 8, dans lequel le circuit de port cible communique avec un port initiateur d'un second contrôleur d'un dispositif de stockage compatible avec la norme de protocole SAS.

15. Contrôleur selon la revendication 14, comprenant en outre une mémoire tampon contextuelle d'entrée/de sortie (en anglais « Input/Output » - I/O) (530) de la couche transport d'émission pour stocker un contexte I/O associé à un groupe connecté de tâches utilisé pour identifier un port initiateur, un port cible, une unité logique et une tâche, la mémoire tampon contextuelle I/O (530) stockant des champs dynamiques et instantanés relatifs au groupe connecté de tâches.

16. Contrôleur selon la revendication 15, dans lequel la différente étiquette de transfert de port cible est une étiquette fantôme incluant un nombre non associé à une commande en cours, et dans lequel l'étiquette fantôme est mise à jour dans la mémoire tampon contextuelle d'entrée/de sortie (en anglais « Input/Output » - I/O) (530).

17. Contrôleur selon la revendication 16, comprenant en outre une mémoire tampon contextuelle d'entrée/de sortie (en anglais « Input/Output » - I/O) (530) de la couche transport de réception pour stocker un contexte I/O pour le groupe connecté de tâches, la mémoire tampon contextuelle I/O (530) stockant des champs dynamiques et instantanés relatifs au groupe connecté de tâches, et dans lequel, le processeur de protocole de réception (532) basé sur les champs dynamiques et instantanés de la mémoire tampon contextuelle I/O de réception (530) associée au groupe connecté de tâches détermine les trames de données d'écriture reçues d'un port initiateur à enregistrer.
